# EUROPÄISCHE PATENTSCHRIFT

(11) **EP 3 394 470 B1**
(45) Veröffentlichungstag und Bekanntmachung des Hinweises auf die Patenterteilung: **01.07.2020**
(21) Anmeldenummer: 16793908.1
(22) Anmeldetag: 10.11.2016
(51) Int. Cl.: F16D 65/12

(54) **BREMSSCHEIBE FÜR FAHRZEUGE**
BRAKE DISK FOR VEHICLES
DISQUE DE FREIN POUR VÉHICULES

(30) Priorität: 22.12.2015 DE 102015226449
(43) Veröffentlichungstag der Anmeldung: 31.10.2018
(73) Patentinhaber: Bayerische Motoren Werke Aktiengesellschaft, 80809 München (DE)
(72) Erfinder: HOFSTETTER, Josef, 85395 Wimpasing (DE); KOKOTT, Kordian, 85435 Erding (DE); SCHULZ, Ulf, 13158 Berlin (DE)
(86) Internationale Anmeldenummer: PCT/EP2016/077238
(87) Internationale Veröffentlichungsnummer: WO 2017/108259

(56) Entgegenhaltungen:
- EP-A1- 0 872 659
- EP-A1- 1 260 728
- WO-A1-2015/022126
- DE-A1- 10 032 972
- DE-A1-102009 017 234

## Beschreibung

Die Erfindung betrifft Verbund-Bremsscheiben für Kraftfahrzeuge, nach dem Oberbegriff des ersten Anspruchs. Bremsscheiben sind mit einem Rad koaxial montierte Bestandteile eines Bremssystems für Kraftfahrzeuge, welche einen Reibring und einen Bremsscheibentopf aufweisen. Der Bremsscheibentopf dient dabei der Befestigung der Bremsscheibe an einer Radnabe, während der Reibring während des Bremsvorganges in tribologischen Kontakt mit den Bremsbelägen des Bremssystems gebracht wird. Hierdurch wird die kinetische Energie des Kraftfahrzeuges in Form von Reibungswärme abgebaut, das Fahrzeug wird abgebremst.

Solche Bremsscheiben können ein- oder mehrteilig gefertigt werden, wobei die größten Beanspruchungen an das Material des Reibringes gerichtet sind. Reibringe werden daher in der Regel als Gussbauteile, insbesondere in GG-15 oder GG-25, ausgeführt. Zur Abfuhr der beim Bremsvorgang entstehenden Wärme aus dem Reibring sind solche Reibringe häufig in Form innenbelüfteter Reibringe gestaltet, das heißt, sie sind mit Kanälen oder Bohrungen versehen, welche mit Luft durchströmt sind, um so die Wärmeabfuhr aus dem Reibring zu verbessern.

Eine solche Bremsscheibe, bei welcher der oder die (üblicherweise zusammenhängenden) Reibringe getrennt vom Bremsscheibentopf gefertigt werden und danach mit diesem geeignet verbunden werden hat den Vorteil, dass der/die Reibring(e) einerseits und der Bremsscheibentopf andererseits aus den für die jeweiligen Anforderungen günstigsten Materialien gefertigt sein können. Hierdurch kann beispielsweise zum einen eine Gewichtsersparnis erzielt werden, und zum anderen ist damit eine vorteilhafte Entkoppelung zwischen dem Reibring und dem Bremsscheibentopf möglich.

Die DE 100 32 972 A1 beschreibt eine solche Verbund-Bremsscheibe, bei der der im Wesentlichen wie üblich geformte Bremsscheibentopf einen bezüglich der Drehachse der Scheibenbremse kreiszylindrischen Mantel besitzt, in dem Durchbrüche oder zumindest Abschnitte mit reduzierter Wandstärke vorgesehen sind. Damit besitzt dieser Bremsscheibentopf eine gewisse Elastizität, die einer im Wesentlichen ungehinderten thermischen Reibringdehnung förderlich ist, d.h. die nicht vermeidbare thermische Reibringdehnung wird somit durch den Bremsscheibentopf nicht nennenswert behindert, so dass keine Spannungen aufgebaut werden und unerwünschte Reibringverformungen ausgeschlossen werden. In dieser Schrift ist als Material für den Bremsscheibentopf ein höherfestes Stahlmaterial oder ähnliches vorgeschlagen.

Des Weiteren zeigt die EP 1 260 728 A1 eine zweiteilige Bremsscheibe mit Schraubverbindung und als nächstliegender Stand der Technik, die WO 2015/022126 A1, eine Bremsscheibe für ein Fahrzeug mit einem Bremsscheibentopf, dessen Mantel an seinem Außenumfang Abschnitte mit reduzierter Wandstärke besitzt, die der teilweisen Platzierung von axial ausgerichteten Verbindungsmitteln zwischen Bremsscheibentopf und Reibring dienen.

Aufgabe der vorliegenden Erfindung ist, eine Bremsschreibe bereit zu stellen, bei welcher durch eine geeignete Verbindung von Reibring und Bremsscheibentopf der Platzbedarf für die Anbindung der Bremsscheibe an der Radnabe gering gehalten werden kann. Zusätzlich soll eine Verbindung zwischen Bremsscheibentopf und Reibring bereitgestellt werden, die bei Erhitzung durch das Bremsen möglichst wenig Spannungen in der Bremsscheibe aufbaut und dazu noch eine sehr große Bremskraft übertragen kann.

Die Aufgabe wird erfindungsgemäß mit den Merkmalen des Anspruchs 1 gelöst. Weitere Ausgestaltungen der Erfindung ergeben sich aus den abhängigen Ansprüchen.

Nach der Erfindung ist eine Bremsscheibe für eine Scheibenbremse, die aus einem Bremsscheibentopf und wenigstens einem mit diesem über Nieten verbundenen Reibring besteht, wobei ein Mantel des Bremsscheibentopfs mit Abschnitten mit reduzierter Wandstärke und/oder Durchbrüchen versehen ist, die am Außenumfang des Bremsscheibentopf-Mantels befindliche, axial gerichtete Material-Aussparungen sind, die zur zumindest teilweisen Platzierung der axial gerichteten Nieten dienen, wobei der Reibring und der Bremsscheibentopf ausschließlich über die Nieten zueinander zentriert sind und dass der Reibring wenigstens einen von der Reibfläche nach innen gerichteten Befestigungsfortsatz aufweist, mit dem ein Kragen des Bremsscheibentopf-Mantels durch die Nieten verbunden ist, indem die zum Bremsscheibentopf hin gerichtete Seite des Reibrings eine axial gerichtete Einsenkung zur Aufnahme des Kragens des Bremsscheibentopfs besitzt, die so gestaltet ist, dass zwischen Bremsscheibentopf und Reibring ein Radialspiel vorhanden ist, dadurch gekennzeichnet, dass der Innendurchmesser der Einsenkung größer ist als ein Außendurchmesser des Kragens und dass die Einsenkung den Kragen des Bremsscheibentopfs vollständig aufnimmt.

Dass die Reibscheibe zum Bremsscheibentopf ausschließlich mittels der Nieten zentriert ist, hat den Vorteil, dass bei best möglich bearbeitbarer Auflage des Bremsscheibentopfs auf der Reibscheibe eine zentrierende Nietverbindung zwischen den beiden Teilen bereitgestellt werden kann, die einerseits eine Übertragung hoher Bremskräfte ermöglicht und andererseits bezüglich der Wärmeübertragung von Reibscheibe auf Bremsscheibentopf eine bestmögliche Isolationswirkung bei gleichzeitig großer Verzugsfreiheit bewirkt. Zusätzlich ist von Vorteil, wenn eine zu einer Bohrung im Befestigungsfortsatz zur Aufnahme des Niets korrespondierende Bohrung zur Aufnahme des Niets im Kragen des Bremsscheibentopfs an ihrem von der Reibscheibe weg gerichteten Ende eine plane Einsenkung besitzt, zur teilweisen oder vollständigen Aufnahme des Setzkopfs des Niets. Dadurch bilden Setzkopf und Bremsscheibentopfkragen eine im Wesentlichen plane Fläche bilden und so kann ein Anhaften von Schmutz und Bremsbelagabrieb vermindert werden.

Vorteilhafterweise kann so die Fortsetzung der Reibscheibenfläche nach innen, hin bis zum Bremsscheibentopfmantel im Wesentlichen eben gestaltet werden, was eine Ansetzten von Schmutz und ein Eindringen von Wasser in die Verbindung von Bremsscheibentopf und Reibscheibe erschwert.

Eine ausschließliche Zentrierung von Bremsscheibentopf und Reibring zueinander über die Nieten hat auch den Vorteil, dass bei Erhitzung und verschiedenen Ausdehnungskoeffizienten der Werkstoffe keine Spannungen entstehen können aufgrund von weiteren Festlegungen der beiden Teile zueinander. Um ein optimales Tragbild der Nieten gewährleiten zu können, speziell im relevanten Querschnitt, sollten diese dann speziell ausgeformt werden, mit geometrischem Vorhalt um einen Kraftübertragungs-Verlust, der bei Standardnieten nach dem Stand der Technik entsteht auszugleichen, weil diese bei ihrer Verformung eine sich verjüngende Tonnenform mit schlechterem Tragbild ausbilden. Versuche haben gezeigt, dass eine beim Setzen des Nietes voreilende Leibung direkt am Setzkopf, zum Beispiel ein Konus über einen Teilbereich des Nietschafts, die durch die im Vernietungsprozess nach dem Stand der Technik herbeigeführte Tonnenform verhindert und das Tragbild des Niets in der Nähe des Setzkopfs optimiert. So ist es vorteilhaft, wenn jeder Niet vor seiner Verformung, wenigstens über einen Teilbereich seines Nietschaftes im Bereich des Bremsscheibentopfs, von einem Setzkopf ausgehend, einen Konus besitzt, dessen Durchmesser sich zu einem Niet-Schließkopf hin gerichtet verkleinert.

Des Weiteren kann die Bremsscheibe vorteilhafterweise so gestaltet sein, dass deren Reibring wenigstens einen von der Reibfläche nach innen gerichteten Befestigungsfortsatz aufweist, mit dem ein Kragen eines Bremsscheibentopf-Mantels durch die Nieten verbunden ist. Durch den Befestigungsfortsatz kann eine Auflagefläche für den Kragen des Bremsscheibentopfs geschaffen werden, die wie dieser vor dem Fügevorgang zum Beispiel spanend mit einer vorteilhaften Oberflächenbeschaffenheit für die Fügepaarung versehen werden kann. Die Auflagefläche von Bremsscheibentopf-Kragen und Reibring kann bezüglich der Wärmeübertragung so optimiert werden, dass durch den Wärmeübergang bei Erhitzung der Reibscheibe möglichst geringe Spannungen in den Fügepartnern entstehen.

Aus diesem Grund besitzt eine vorteilhafte Ausführungsform der Bremsscheibe Einbuchtungen am Innendurchmesser des Reibrings an dessen Einsenkung und Auflagefläche des Kragens des Bremsscheibentopfs, wobei zwischen den Einbuchtungen jeweils ein Niet platziert ist. Bei einer bevorzugten Ausführungsform besitzen die Einbuchtungen in radialer Richtung gesehen eine maximale Tiefe, die durch einen Teilkreis von miteinander verbundenen Längsachsen der Nieten begrenzt wird. Sie reichen also bis zum Nietmittelpunkt, natürlich in Umfangsrichtung versetzt zu diesem.

Weitere vorteilhafte Ausführungsformen der Erfindung sehen vor, dass eine innenbelüftete Bremsscheibe zum Einsatz kommt, mit zwei benachbart zueinander angeordneten Reibscheiben, die durch radial verlaufende, regelmäßig angeordnete Stege miteinander verbunden sind, wobei die Stege von einem Außenumfangsrand bis zu einem Innenumfangrand der Reibscheiben verlaufen und diese so durch die Stege verbunden sind, dass deren Zwischenräume mit Kühlluft durchströmbare, gleich große Kühlkanäle ausbilden, die durch weitere, kürzere Stege so unterteilt sind, dass sich in einem radialen Bereich näher am Innenumfangrand der Reibscheiben mittig zwischen den Stegen jeweils ein kürzerer Steg befindet und die kürzeren Stege die Stege in radialer Richtung nach innen überragen und bis an den Befestigungsfortsatz reichen, wo in radialer Richtung nach innen fluchtend jeweils ein Niet den Befestigungsfortsatz mit dem Kragen verbindet.

Dadurch erhält man eine noch stabilere Ausführungsform der Bremsscheibe, die noch mehr Bremskraft übertragen kann, insbesondere wenn auf dem Teilkreis zur Nietverbindung achtzehn Nieten regelmäßig angeordnet sind.

Weitere bevorzugte Ausführungsformen der Erfindung sehen vor, dass sich die Kühlkanäle, in radialer Richtung vom kürzeren Steg nach außen gerichtet, in wenigstens drei Strömungskanäle aufteilen, indem in jedem Kühlkanal, in Umfangsrichtung zu jedem kürzeren Steg radial nach außen versetzt, zwei erste weitere kürzere Stege angeordnet sind.

Eine solche Anordnung und Gestaltung von Kühlkanälen zwischen den Reibscheiben ergibt eine große Rippendichte. Je größer diese ist, desto größer ist auch die Kühlfläche und desto besser können auftretende Temperaturspitzen ausgeglichen werden, was zu einer optimierten Kühlung der Bremsscheibe führt. Die Kühlkanalanordnung, welche die Oberfläche zur Kühlung der Bremsscheibe vergrößert erhöht damit vorteilhafterweise die Kühlleistung.

Vorteilhaft ist auch, wenn die zum Bremsscheibentopf hin gerichtete Reibscheibe nach innen gerichtet zum Befestigungsfortsatz verlängert ist und diesen dadurch ausbildet.

Weitere vorteilhafte Ausführungsformen der Erfindung zeichnen sich dadurch aus, dass die Nietgeometrie weiter optimiert ist. So ist ein Übergang vom Nietschaft zum Niet-Setzkopf vorgesehen, der mit einem Axial-Freistich am Niet-Setzkopf versehen ist. Ein Freistich mit 88 Winkelgrad zwischen Nietschaft und der Unterseite des Nietsetzkopfs wird bevorzugt. Versuche haben gezeigt, dass dadurch das Tragbild zwischen Niet und Bremsscheibentopf noch weiter optimiert und somit die Verbindung zu noch größerer Kraftübertragung bei längerer Standzeit geeignet ist. Dieser Vorteil wird zusätzlich noch dadurch vergrößert, wenn die Nieten aus einem austenistischen, nichtrostenden Stahl bestehen. Dabei kann der Bremsscheibentopf aus Leichtmetall oder aus Stahl oder aus einem Nichtmetallwerkstoff bestehen, das heißt als Materialien für den Topf kommen vorzugsweise höherfeste hochfeste Leichtmetalle (u.a. Magnesium), oder ein hochfestes, dünnwandiges Stahlblech oder Aluminium und andere Nichteisen- bzw. Nichtmetallwerkstoffe in Frage. Der Bremsscheibentopf ist daher bspw. durch ein Gussverfahren oder ein Schmiedeverfahren oder durch Fließpressen herstellbar. Bei Verwendung eines erfindungsgemäßen in einem Leichtbaumaterial ausgeführten Bremsscheibentopfes ist neben Aluminiumrädern ein Einsatz von Stahlrädern möglich.

Wenn der Bremsscheibentopf und der Reibring mittels eines Taumel-Niet-Verfahrens miteinander verbunden werden, kann eine Flächenpressung der Nieten auch auf dem Graugussmaterial des Reibrings möglichst gering gehalten werden.

Ein bevorzugtes Ausführungsbeispiel der vorliegenden Erfindung einer Bremsscheibe ist in der beigefügten Zeichnung dargestellt. Erfindungswesentlich können sämtliche näher beschriebenen Merkmale sein. Es zeigen:
Fig.1 eine erfindungsgemäße Bremsscheibe in räumlicher Darstellung mit Blick auf den Bremsscheibentopf,
Fig.2 die Bremsscheibe nach Figur 1 in einem vergrößerten Teilschnitt (die Schnittebene enthält die Drehachse), gegenüber Figur 1 um eine in der Zeicheneben liegende Vertikalachse gedreht, im Bereich der Befestigungsstelle der Reibscheibe am Bremsscheibentopf,
Fig.3 eine noch weiter vergrößerte und um 180 Winkel-Grad gedrehte Teilansicht eines Niets aus Fig.2,
Fig.4 eine Aufsicht auf die Topf-Seite der Bremsscheibe, sowie
Fig.5 eine Teil-Aufsicht auf die gegenüber Fig. 4 um 180 Winkel-Grad gedrehte Rückseite der Bremsscheibe, mit einer Darstellung der Verbindung beider Reibscheiben über Stege, mittels einer Bruchdarstellung eines Teils der Reibscheibe.

Die in den Figuren dargestellte Bremsscheibe 1 besteht aus einem Bremsscheibentopf 3 und einem Reibring 2 und ist für eine Montage an einer nicht gezeigten Radnabe vorgesehen, um mit dieser im Betrieb um die Drehachse D zu rotieren. Der einstückige innengekühlte und in Grauguss gefertigte Reibring 2 besteht aus zwei Reibscheiben 2', 2" mit dazwischen liegenden und diese miteinander verbindenden Stegen 2''' einer Kühlluftführung. Die in Axialrichtung, d.h. in Richtung der Drehachse D betrachtet näher am Bremsscheibentopf 3 liegende ringförmige Reibscheibe 2' erstreckt sich in Radialrichtung R (bezüglich der Drehachse D) betrachtet mit einem sog. Befestigungsfortsatz 9 um ein gewisses Maß weiter zur Drehachse D hin als die andere in Axialrichtung weiter vom Bremsscheibentopf 3 entfernte Reibscheibe 2".

Im Überlappungsbereich zwischen dem genannten Befestigungsfortsatz 9 der Reibscheibe 2' und einem vom freien Ende des bezüglich der Drehachse D kreiszylindrischen Mantels 3a des Bremsscheibentopfes 3 in Radialrichtung R nach außen abstehenden Kragens 3b ist der Bremsscheibentopf 3 über sich in Axialrichtung erstreckende Nieten 5 mit der Reibscheibe 2' und somit mit dem Reibring 2 verbunden. In diesem Sinne wird vorliegend (und insbesondere in der Beschreibungseinleitung) von einer Verbindung zwischen dem Bremsscheibentopf 3 und dem Reibring 2 gesprochen.

In den Mantel 3a des Bremsscheibentopfes 3 sowie in geringem Umfang auch in den Boden 3c des Bremsscheibentopfes 3 sind gleichmäßig über dem Umfang des Bremsscheibentopfes 3 verteilt Aussparungen 7 eingebracht, in welche die Nieten 5 hineinragen, d.h. in denen die Nieten 5 zumindest anteilig platziert sind. Jede dieser Aussparungen 7, welche auch Abschnitte 7 mit reduzierter Wandstärke bilden, erstreckt sich in Axialrichtung, um den jeweils zugehörigen ebenso orientierten Niet 5 und dient zu seiner teiweisen Aufnahme bzw. zum Setzen des Niets 5 bei der Montage d.h. der Verbindung von Bremsscheibentopf 3 mit Reibring 2, wie ersichtlich in Axialrichtung. Dabei besitzen die Aussparungen 7 im Wesentlichen die Form eines Halbkreis-Zylinders und werden in den Mantel 3a des Bremsscheibentopfes 3 beim Gießen oder Schmieden eingeformt, so dass dieser Mantel 3a im Bereich der Aussparungen 7 zwar geschwächt ist, jedoch innen, d.h. von der Drehachse D aus betrachtet noch eine geschlossene Wand bildet. Selbstverständlich sind auch im Kragen 3b des Bremsscheibentopfs 3 Durchbrüche in Form von Bohrungen quasi als Fortsetzung zu den Aussparungen 7 vorgesehen, durch welche die Nieten 5 hindurch gesteckt sind. So können aufgrund dieser Aussparungen 7 die Nieten 5 näher zur Drehachse D hin angeordnet sein.

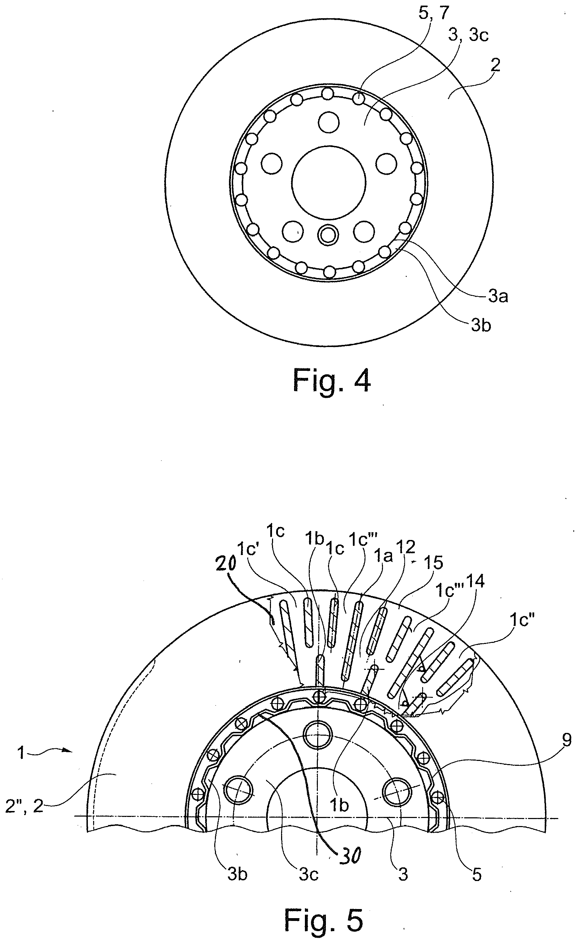

Die Figur 5 zeigt auf der Innenseite der Reibscheibe 2' der Bremsscheibe 1 eine sich in Umfangsrichtung über deren Kreisringfläche geometrisch regelmäßig wiederholende Stegkombination aus Stegen 1a und kürzeren Stegen 1b, 1c der innenbelüfteten Bremsscheibe 1. Die Reibscheiben 2', 2" des Reibrings 2 sind miteinander über die Stege 1a und die kürzeren Stege 1b, 1c verbunden, wobei die Stege 1a gleichzeitig Kühlkanäle 20 begrenzen, die sich in Umfangsrichtung über die Kreisringflächen der Reibscheiben 2', 2" ebenfalls geometrisch regelmäßig wiederholen. Die Kühlkanäle 20 erstrecken sich jeweils von einem Innenumfangsrand 14 der Reibscheiben 2', 2", am Beginn der Stege 1a bis zu einem Außenumfangsrand 15 der Reibscheiben 2', 2" der Bremsscheibe 1.

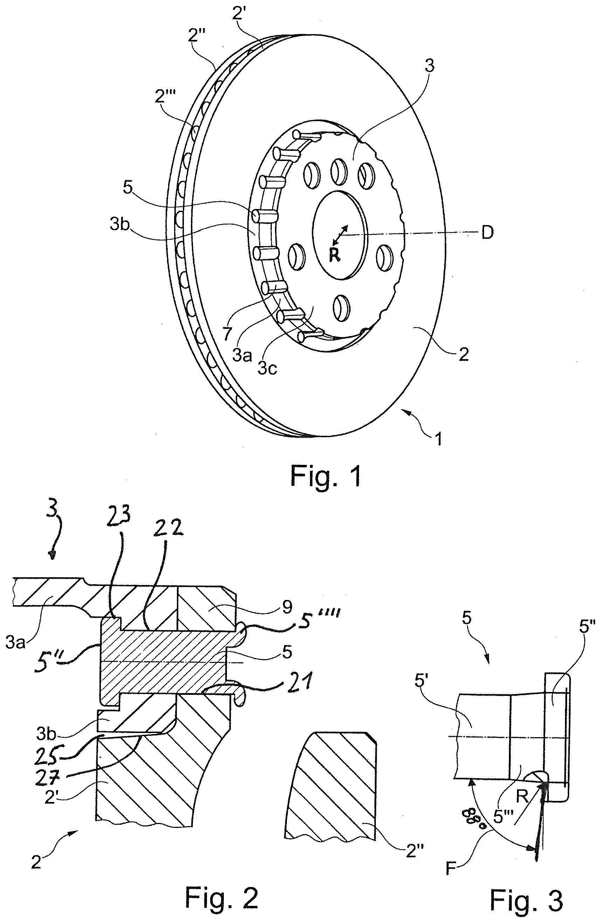

In Umfangsrichtung, mittig in jedem Kühlkanal 20 zwischen den jeweils gleich langen Stegen 1a innerhalb der Reibscheiben 2', 2" erstreckt sich jeweils der kurze Steg 1b von nahe des Innenumfangsrands 14 der Reibscheiben 2', 2" in Richtung deren Außenumfangsrand 15 bis zu einem ersten Durchmesser 12 der Reibscheiben 2', 2". Von diesem ausgehend, erstrecken sich radial weiter nach außen bis zum Außenumfangsrand 15 hin, zwei innerhalb des Kühlkanals 20 in Umfangsrichtung zum kurzen Steg 1b versetzte, erste weitere kurze Stege 1c, einer nach links, der andere nach rechts versetzt. Die ersten weiteren kurzen Stege 1c teilen die Kühlkanäle 20, in radialer Richtung vom kürzeren Steg 1b nach außen gerichtet, in drei Strömungskanäle 1c', 1c", 1c'" auf. Alle Stege 1a, 1b, 1c weisen im Wesentlichen eine einheitliche Stegbreite auf und sind vorne und hinten abgerundet. Dabei liegen die radial äußeren Enden der jeweiligen Stege 1a, 1c auf demselben Kreisumfang in der Nähe des Außenumfangrands 15 und die radial inneren Enden der jeweiligen Stege 1a auf demselben Kreisumfang in der Nähe des Innenumfangrands 14 der Bremsscheibe 1. Außerdem ist, von jedem der kürzeren Stege 1b ausgehend, die zu dem Bremsscheibentopf 3 hin gerichtete Reibscheibe 2' radial nach innen gerichtet verlängert und auf Höhe des Kragens 3b des Bremsscheibentopfes 3 mit einer Bohrung 21 in axialer Richtung versehen, die der Aufnahme des Niets 5 dient, der die Reibscheibe 2' an dem Bremsscheibentopf 3 befestigt. Schließköpfe 5"" aller Nieten 5 befinden sich an der sichtbaren Seite des Befestigungsfortsatzes 9 der Reibscheibe 2', während sich die Setzköpfe 5" der Nieten 5 vollständig versenkt in einer planen Einsenkung 23 des Kragens 3b des Bremsscheibentopfs 3 befinden, wie in Figur 2 dargestellt ist. Die zum Bremsscheibentopf 3 hin gerichtete Reibscheibe 2' besitzt ebenfalls eine axial gerichtete Einsenkung 27 zur Auflage des Kragens 3b des Bremsscheibentopfs 3, deren Innendurchmesser größer ist als ein Außendurchmesser des Kragens 3b, so dass die Reibscheibe 2' und der Bremsscheibentopf 3 zueinander ausschließlich mittels der Nieten 5 zentriert sind. Die zum Bremsscheibentopf 3 hin gerichtete Seite des Reibrings 2 besitzt also eine axial gerichtete Einsenkung 27 zur Aufnahme des Kragens 3b des Bremsscheibentopfs 3, die so gestaltet ist, dass zwischen Bremsscheibentopf 3 und Reibring 2 ein Radialspiel 25 vorhanden ist.

Figur 3 zeigt eine Teilansicht eines Niets 5 ausgebildet als Halbhohlniet 5mm x 13mm mit Setzkopf 5" und Nietschaft 5'. Zum Setzkopf 5" hin ist der Nietschaft 5' konisch mit zunehmendem Durchmesser ausgebildet. Der Setzkopf 5" besitzt zum Nietschaft 5' hin gerichtet einen Freistich, so dass der mit einem Doppelpfeil F bezeichnete Winkel im Wesentlichen 88 Winkelgrad misst. Ein Betrag eines Radius R zwischen Konus 5'" des Nietschafts 5' und Freistich des Setzkopfs 5" ist nicht festgelegt und ergibt sich durch die Fertigung. Der Konus 5'" besitzt eine Länge von wenigstens 1,5mm und höchstens 4mm, wobei der Durchmesser des Konus 5'" am Setzkopf 5" 5,33mm beträgt. Versuche haben ergeben, dass diese Nietgeometrie bei einer Nietselbstzentrierung während des Setzens des Niets 5 ein vorteilhaftes Tragbild mit 100% Traganteil, was eine optimale Zentrierung und Kraftübertragung ergibt. Zusätzlich bewirken der konische Nietschaft 5' und der Freistich F des Setzkopfs 5" eine perfekte Abdichtung der Nietverbindung und so Schutz gegen korrosive Medien.

## Patentansprüche

1. Bremsscheibe (1) für eine Scheibenbremse, die aus einem Bremsscheibentopf (3) und wenigstens einem, mit diesem über Nieten (5) verbundenen Reibring (2) besteht, wobei ein Mantel (3a) des Bremsscheibentopfs (3) mit Abschnitten (7) mit reduzierter Wandstärke und/oder Durchbrüchen versehen ist, die am Außenumfang des Bremsscheibentopf-Mantels (3a) befindliche, axial gerichtete Material-Aussparungen (7) sind, die zur zumindest teilweisen Platzierung der axial gerichteten Nieten (5) dienen, wobei der Reibring (2) und der Bremsscheibentopf (3) ausschließlich über die Nieten (5) zueinander zentriert sind und der Reibring (2) wenigstens einen von der Reibfläche nach innen gerichteten Befestigungsfortsatz (9) aufweist, mit dem ein Kragen (3b) des Bremsscheibentopf-Mantels (3a) durch die Nieten (5) verbunden ist, indem die zum Bremsscheibentopf (3) hin gerichtete Seite des Reibrings (2) eine axial gerichtete Einsenkung (27) zur Aufnahme des Kragens (3b) des Bremsscheibentopfs (3) besitzt, die so gestaltet ist, dass zwischen Bremsscheibentopf (3) und Reibring (2) ein Radialspiel (25) vorhanden ist, **dadurch gekennzeichnet, dass** der Innendurchmesser der Einsenkung (27) größer ist als ein Außendurchmesser des Kragens (3b) und dass die Einsenkung (27) den Kragen (3b) des Bremsscheibentopfs (3) vollständig aufnimmt.

2. Bremsscheibe (1) nach Anspruch 1, **dadurch gekennzeichnet, dass** die Auflagefläche der Einsenkung (27) des Reibrings (2) an deren Innendurchmesser Einbuchtungen (30) besitzt und dass zwischen diesen jeweils ein Niet (5) platziert ist.

3. Bremsscheibe (1) nach Anspruch 2, **dadurch gekennzeichnet, dass** die Einbuchtungen (30) in radialer Richtung gesehen eine maximale Tiefe besitzen, die durch einen Teilkreis von miteinander verbundenen Längsachsen der Nieten (5) begrenzt wird.

4. Bremsscheibe (1) nach einem der Ansprüche 1 bis 3, **dadurch gekennzeichnet, dass** diese eine innenbelüftete Bremsscheibe (1) ist, mit zwei benachbart zueinander angeordneten Reibscheiben (2',2"), die durch radial verlaufende, regelmäßig angeordnete Stege (1a), miteinander verbunden sind, wobei die Stege (1a) von einem Außenumfangsrand (15) bis zu einem Innenumfangrand (14) der Reibscheiben (2',2") verlaufen und diese so durch die Stege (1a) verbunden sind, dass deren Zwischenräume mit Kühlluft durchströmbare, gleich große Kühlkanäle (20) ausbilden, die durch weitere, kürzere Stege (1b) so unterteilt sind, dass sich in einem radialen Bereich näher am Innenumfangrand (14) der Reibscheiben (2',2") mittig zwischen den Stegen (1a) jeweils ein kürzerer Steg (1b) befindet und die kürzeren Stege (1b) die Stege (1a) in radialer Richtung nach innen überragen und bis an den Befestigungsfortsatz (9) reichen, wo in radialer Richtung nach innen fluchtend jeweils ein Niet (5) den Befestigungsfortsatz (9) mit dem Kragen (3b) verbindet.

5. Bremsscheibe (1) nach einem der Ansprüche 3 oder 4, **dadurch gekennzeichnet, dass** auf dem Teilkreis achtzehn Nieten regelmäßig angeordnet sind.

6. Bremsscheibe (1) nach einem der Ansprüche 4 oder 5, **dadurch gekennzeichnet, dass** sich die Kühlkanäle (20), in radialer Richtung vom kürzeren Steg (1b) nach außen gerichtet, in wenigstens drei Strömungskanäle (1c', 1c", 1c'") aufteilen, indem in jedem Kühlkanal (20), in Umfangsrichtung zu jedem kürzeren Steg (1b) radial nach außen versetzt, zwei erste weitere kürzere Stege (1c) angeordnet sind.

7. Bremsscheibe (1) nach einem der Ansprüche 4 bis 6, **dadurch gekennzeichnet, dass** die zum Bremsscheibentopf (3) hin gerichtete Reibscheibe (2') nach innen gerichtet zum Befestigungsvortsatz (9) verlängert ist.

8. Bremsscheibe (1) nach einem der Ansprüche 1 bis 6, **dadurch gekennzeichnet, dass** eine zu einer Bohrung (21) im Befestigungsfortsatz (9) zur Aufnahme des Niets (5) korrespondierende Bohrung (22) zur Aufnahme des Niets (5) im Kragen (3b) des Bremsscheibentopfs (3) an ihrem von der Reibscheibe (2) weg gerichteten Ende eine plane Einsenkung (23) besitzt, zur wenigstens teilweisen Aufnahme eines Setzkopfs (5") des Niets (5).

9. Bremsscheibe (1) nach Anspruch 8, **dadurch gekennzeichnet, dass** die plane Einsenkung (23) des Kragens (3b) des Bremsscheibentopfs (3) den Setzkopf (5") des Niets (5) vollständig aufnimmt.

10. Bremsscheibe (1) nach Anspruch 8 oder 9, **dadurch gekennzeichnet, dass** ein Übergang von einem Nietschaft (5') zum Niet-Setzkopf (5") mit einem Axial-Freistich (F) am Niet-Setzkopf (5") versehen ist.

11. Bremsscheibe (1) nach einem der Ansprüche 1 bis 10, **dadurch gekennzeichnet, dass** jeder Niet (5), vor seiner Verformung, wenigstens über einen Teilbereich seines Nietschaftes (5') im Bereich des Bremsscheibentopfs (3), von einem Setzkopf (5") ausgehend, einen Konus (5"') besitzt, dessen Durchmesser sich zu einem Niet-Schließkopf (5"") hin gerichtet verkleinert.

12. Bremsscheibe (1) nach einem der Ansprüche 1 bis 11, **dadurch gekennzeichnet, dass** der Bremsscheibentopf (3) aus Leichtmetall oder aus Stahl oder aus einem Nichtmetallwerkstoff besteht.

13. Bremsscheibe (1) nach einem der Ansprüche 1 bis 12, **dadurch gekennzeichnet, dass** der Bremsscheibentopf (3) und der Reibring (2) mittels eines Taumel-Niet-Verfahrens miteinander verbunden werden.

14. Bremsscheibe (1) nach einem der Ansprüche 1 bis 13, **dadurch gekennzeichnet, dass** die Nieten (5) aus einem austenistischen, nichtrostenden Stahl bestehen.

## Claims

1. A brake disc (1) for a disc brake which consists of a brake-disc hub (3) and at least one friction ring (2) which is connected to the brake-disc hub via rivets (5), wherein a casing (3a) of the brake-disc hub (3) is provided with portions (7) of reduced wall thickness and/or apertures which are axially directed material cut-outs (7) situated on the outer circumference of the brake-disc hub casing (3a) and are used for at least partial placement of the axially directed rivets (5), the friction ring (2) and the brake-disc hub (3) being centred in relation to one another exclusively via the rivets (5) and the friction ring (2) having at least one fastening extension (9), which is directed inwardly from the friction surface and to which a collar (3b) of the brake-disc hub casing (3a) is connected by the rivets (5), whilst the side of the friction ring (2) which is directed towards the brake-disc hub (3) has an axially directed depression (27) for accommodating the collar (3b) of the brake-disc hub (3), which depression is configured such that an amount of radial play (25) is present between the brake-disc hub (3) and the friction ring (2), **characterised in that** the inner diameter of the depression (27) is greater than an outer diameter of the collar (3b), and **in that** the depression (27) fully accommodates the collar (3b) of the brake-disc hub (3).

2. A brake disc (1) according to claim 1, **characterised in that** the support face of the depression (27) of the friction ring (2) has indents (30) on its inner diameter, and **in that** one rivet (5) is placed between each of said indents.

3. A brake disc (1) according to claim 2, **characterised in that** the indents (30), as seen in the radial direction, have a maximum depth that is limited by a pitch circle of interconnected longitudinal axes of the rivets (5).

4. A brake disc (1) according to one of claims 1 to 3, **characterised in that** the brake disc is an internally ventilated brake disc (1) having two adjacent friction discs (2', 2") which are connected to one another by radially extending, regularly arranged webs (1a),
the webs (1a) extending from an outer-circumference edge (15) as far as an inner-circumference edge (14) of the friction discs (2', 2"), and the latter being connected by the webs (1a) such that the gaps between them form cooling channels (20) of equal size, through which cooling air is flowable and which are divided by further, shorter webs (1b) such that in each case one shorter web (1b) is arranged in a radial region closer to the inner-circumference edge (14) of the friction discs (2', 2"), centrally between the webs (1a), and the shorter webs (1b) project radially inwardly beyond the webs (1a) and extend as far as the fastening extension (9), where, in alignment in the radially inward direction, a rivet (5) connects the fastening extension (9) to the collar (3b).

5. A brake disc (1) according to one of claim 3 or 4, **characterised in that** eighteen rivets are arranged regularly spaced over the pitch circle.

6. A brake disc (1) according to one of claim 4 or 5, **characterised in that**, directed radially outwardly from the shorter web (1b), the cooling channels (20) divide up into at least three flow channels (1c', 1c", 1c''') as a result of two first further shorter webs (1c) being arranged in each cooling channel (20) and being offset radially outwards in relation to each shorter web (1b) in the circumferential direction.

7. A brake disc (1) according to one of claims 4 to 6, **characterised in that** the friction disc (2'), which is directed towards the brake-disc hub (3), is extended inwards in the direction of the fastening extension (9).

8. A brake disc (1) according to one of claims 1 to 6, **characterised in that** a bore (22) for accommodating the rivet (5) in the collar (3b) of the brake-disc hub (3), said bore corresponding to a bore (21) in the fastening extension (9) for accommodating the rivet (5), has a planar depression (23) at its end which is directed away from the friction disc (2) in order to at least partially accommodate the factory head (5") of the rivet (5).

9. A brake disc (1) according to claim 8, **characterised in that** the planar depression (23) of the collar (3b) of the brake-disc hub (3) fully accommodates the factory head (5") of the rivet (5) .

10. A brake disc (1) according to claim 8 or 9, **characterised in that** a transition from a rivet stem (5') to the factory head (5") of the rivet is provided with an axial undercut (F) on the factory head (5") of the rivet.

11. A brake disc (1) according to one of claims 1 to 10, **characterised in that** each rivet (5), prior to its deformation, at least over part of its rivet stem (5') in the region of the brake-disc hub (3), starting from a factory head (5"), has a cone (5''') of which the diameter decreases in the direction of a closing head (5'''') of the rivet.

12. A brake disc (1) according to one of claims 1 to 11, **characterised in that** the brake disc hub (3) is made of light metal, or steel, or a non-metal material.

13. A brake disc (1) according to one of claims 1 to 12, **characterised in that** the brake-disc hub (3) and the friction ring (2) are connected to one another by orbital riveting.

14. A brake disc (1) according to one of claims 1 to 13, **characterised in that** the rivets (5) are made of an austenitic, stainless steel.

## Revendications

1. Disque de frein (1) destiné à un frein à disques qui est constitué par un pot de disque de frein (3) et au moins un anneau de friction (2) qui est relié à celui-ci au moyen de rivets (5), l'enveloppe (3a) du pot du disque de frein (3) étant équipée de segments (7) ayant une épaisseur de paroi réduite et/ou d'ouvertures constitués par des évidements de matériau (7) dirigés axialement situés sur la périphérie externe de l'enveloppe (3a) du pot du disque de frein, et servant au positionnement au moins partiel des rivets (5) dirigés axialement, l'anneau de friction (2) et le pot du disque de frein (3) n'étant centrés l'un par rapport à l'autre que par l'intermédiaire des rivets (5) et l'anneau de friction (2) comprenant au moins un prolongement de fixation (9) dirigé vers l'intérieur à partir de la surface de friction, avec lequel un rebord (3b) de l'enveloppe (3a) du pot du disque de frein est relié par l'intermédiaire des rivets (5), du fait que le côté dirigé vers le pot du disque de frein (3), de l'anneau de friction (2) est équipé d'un renfoncement (27) dirigé axialement destiné à recevoir le prolongement (3b) du pot du disque de frein (3) qui est réalisé de sorte que, entre le pot du disque de frein (3) et l'anneau de friction (2) il y ait un jeu radial (25),
**caractérisé en ce que**
le diamètre interne du renfoncement (27) est supérieur du diamètre externe du rebord (3b) et le renfoncement (27) reçoit totalement le prolongement (3b) du pot (3) du disque de frein.

2. Disque de frein (1) conforme à la revendication 1,
**caractérisé en ce que**
la surface d'appui du renfoncement (27) de l'anneau de friction (2) est équipée sur son diamètre interne d'encoches (30) entre lesquelles est respectivement positionné un rivet (5).

3. Disque de frein (1) conforme à la revendication 2,
**caractérisé en ce que**
les encoches (30) ont, en direction radiale, une profondeur maximum qui est limitée par un arc de cercle défini par des axes longitudinaux reliés entre eux de rivets (5).

4. Disque de frein (1) conforme à l'une des revendications 1 à 3,
**caractérisé en ce qu'**
il est constitué par un disque de frein (1) à ventilation interne comportant deux disques de friction (2', 2") situés au voisinage l'un de l'autre qui sont reliés l'un à l'autre par des barrettes (1a) s'étendant radialement, réparties uniformément,
les barrettes (1a) s'étendant du bord périphérique externe (15) au bord périphérique interne (14) des disques de friction (2', 2") et ces disques de friction étant reliés par les barrettes (1a) de sorte que leur espace intermédiaire forme des canaux de refroidissement (20) de mêmes dimensions pouvant être parcourus par de l'air de refroidissement, qui sont subdivisés par d'autres barrettes (1b) plus courtes, de sorte qu'une barrette plus courte (1b) soit respectivement située dans une zone radiale plus proche du bord périphérique interne (14) des disques de friction (2', 2"), à mi-distance entre les barrettes (1a), et les barrettes plus courtes (1b) dépassant vers l'intérieur en direction radiale les barrettes (1a) et atteignant le prolongement de fixation (9) où en étant aligné vers l'intérieur en direction radiale un rivet respectif (5) relie le prolongement de fixation (9) avec le rebord (3b).

5. Disque de frein (1) conforme à l'une des revendications 3 et 4,
**caractérisé en ce que**
dix-huit rivets sont positionnés régulièrement sur l'arc de cercle.

6. Disque de frein (1) conforme à l'une des revendications 4 et 5,
**caractérisé en ce que**
les canaux de refroidissement (20) sont subdivisés en direction radiale en au moins trois canaux de circulation (1c, 1c", 1c"') orientés vers l'extérieur à partir des barrettes plus courtes (1b) du fait que, dans chaque canal de circulation (20) deux premières autres barrettes plus courtes (1c) sont positionnées en étant décalées radialement vers l'extérieur en direction périphérique par rapport à chaque barrette plus courte (1b).

7. Disque de frein (1) conforme à l'une des revendications 4 à 6,
**caractérisé en ce que**
le disque de friction (2') orienté vers le pot du disque de frein (3) est prolongé vers l'intérieur vers le prolongement de fixation (9).

8. Disque de frein (1) conforme à l'une des revendications 1 à 6,
**caractérisé en ce qu'**
un perçage (22) de réception d'un rivet (5) situé dans le rebord (3b) du pot (3) du disque de frein correspondant à un perçage (21) situé dans le prolongement de fixation (9) pour recevoir le rivet (5) comporte, à son extrémité opposée au disque de friction (2) un renfoncement plat (23) pour recevoir au moins partiellement la tête d'engagement (5") du rivet (5).

9. Disque de frein (1) conforme à la revendication 8,
**caractérisé en ce que**
le renfoncement plat (23) du rebord (3b) du pot (3) du disque de frein reçoit totalement la tête d'engagement (5") du rivet (5).

10. Disque de frein (1) conforme à la revendication 8 ou 9,
**caractérisé en ce que**
la transition entre la tige d'un rivet (5') et la tête d'engagement de ce rivet (5") est équipée d'un dégagement axial (F) au niveau de la tête d'engagement (5") du rivet.

11. Disque de frein (1) conforme à l'une des revendications 1 à 10,
**caractérisé en ce que**
chaque rivet (5) comporte, avant sa déformation, au moins sur une zone partielle de sa tige (5'), dans la zone du pot du disque de frein (3) un cône (5"') partant de la tête d'engagement (5") dont le diamètre diminue en direction de la tête de fermeture (5"") du rivet.

12. Disque de frein (1) conforme à l'une des revendications 1 à 11,
**caractérisé en ce que**
le pot du disque de frein (3) est réalisé en un métal léger ou en acier ou en un matériau non métallique.

13. Disque de frein (1) conforme à l'une des revendications 1 à 12,
**caractérisé en ce que**
le pot du disque de frein (3) et l'anneau de friction (2) sont reliés par un procédé de rivetage culbutage.

14. Disque de frein (1) conforme à l'une des revendications 1 à 13,
**caractérisé en ce que**
les rivets (5) sont réalisés en un acier inoxydable austénitique.
